# EUROPEAN PATENT SPECIFICATION

(11) **EP 1 935 950 B1**
(45) Date of publication and mention of the grant of the patent: **24.03.2010**
(21) Application number: 07122693.0
(22) Date of filing: 07.12.2007
(51) Int. Cl.: C09D 11/00

(54) **Phase Change Inks Containing Dialkyl Ethers**
Phasenwechseltinten mit Dialkylethern
Encres de changement de phase contenant des éthers de dialkyle

(30) Priority: 18.12.2006 US 640682
(43) Date of publication of application: 25.06.2008
(73) Proprietor: Xerox Corporation, Rochester, New York 14644 (US)
(72) Inventor: Wu, Bo, Wilsonville, OR 97070 (US)
(74) Representative: Jones, Helen M.M.

(56) References cited:
- EP-A- 1 285 949
- EP-A- 1 514 912
- EP-A- 1 712 601
- US-A1- 2006 035 999

## Description

Disclosed herein are hot melt or phase change inks and methods for the use thereof. More specifically, disclosed herein are hot melt or phase change inks particularly suitable for use in phase change ink jet printing processes with reduced energy requirements. The ink is defined in claim 1. Also disclosed herein is a process which comprises (1) incorporating into an ink jet printing apparatus the phase change ink; (2) melting the ink; and (3) causing droplets of the melted ink to be ejected in an imagewise pattern onto a substrate.

In general, phase change inks (sometimes referred to as "hot melt inks") are in the solid phase at ambient temperature, but exist in the liquid phase at the elevated operating temperature of an ink jet printing device. At the jet operating temperature, droplets of liquid ink are ejected from the printing device and, when the ink droplets contact the surface of the recording substrate, either directly or via an intermediate heated transfer belt or drum, they quickly solidify to form a predetermined pattern of solidified ink drops. Phase change inks have also been used in other printing technologies, such as gravure printing, as disclosed in, for example, U.S. Patent 5,496,879 and German Patent Publications DE 4205636AL and DE 4205713AL, the disclosures of each of which are totally incorporated herein by reference.

Phase change inks for color printing typically comprise a phase change ink carrier composition which is combined with a phase change ink compatible colorant. In a specific embodiment, a series of colored phase change inks can be formed by combining ink carrier compositions with compatible subtractive primary colorants. The subtractive primary colored phase change inks can comprise four component dyes, namely, cyan, magenta, yellow and black, although the inks are not limited to these four colors. These subtractive primary colored inks can be formed by using a single dye or a mixture of dyes. For example, magenta can be obtained by using a mixture of Solvent Red Dyes or a composite black can be obtained by mixing several dyes. U.S. Patent 4,889,560, U.S. Patent 4,889,761, and U.S. Patent 5,372,852, the disclosures of each of which are totally incorporated herein by reference, teach that the subtractive primary colorants employed can comprise dyes from the classes of Color Index (C.I.) Solvent Dyes, Disperse Dyes, modified Acid and Direct Dyes, and Basic Dyes. U.S. Patent 5,621,022, the disclosure of which is totally incorporated herein by reference, discloses the use of a specific class of polymeric dyes in phase change ink compositions.

Phase change inks have also been used for applications such as postal marking, industrial marking, and labelling.

Phase change inks are desirable for ink jet printers because they remain in a solid phase at room temperature during shipping, long term storage, and the like. In addition, the problems associated with nozzle clogging as a result of ink evaporation with liquid ink jet inks are largely eliminated, thereby improving the reliability of the ink jet printing. Further, in phase change ink jet printers wherein the ink droplets are applied directly onto the final recording substrate (for example, paper, transparency material, and the like), the droplets solidify immediately upon contact with the substrate, so that migration of ink along the printing medium is prevented and dot quality is improved.

Compositions suitable for use as phase change ink carrier compositions are known. Some representative examples of references disclosing such materials include U.S. Patents 3,653,932, 4,390,369, 4,484,948, 4,684,956, 4,851,045, 4,889,560, 5,006,170, 5,151,120, 5,372,852, and 5,496,879, European Patent Publications 0187352, and 0206286, German Patent Publications DE 4205636AL, and DE 4205713AL, and PCT Patent Application WO 94/04619. Suitable carrier materials can include paraffins, microcrystalline waxes, polyethylene waxes, ester waxes, fatty acids and other waxy materials, fatty amide containing materials, sulfonamide materials, resinous materials made from different natural sources (tall oil rosins and rosin esters, for example), and many synthetic resins, oligomers, polymers, and copolymers.

U.S. Patent 6,860,930 (Wu et al.), discloses a phase change ink composition comprising (a) a colorant and (b) a carrier comprising a polyamide, wherein the polyamide component of the carrier contains at least about 10 percent by weight of a branched triamide.

U.S. Patent Publication 2005/0130054 (Yuan et al.), discloses wax based inks for phase change/hot melt inkjet printing or thermal transfer printing applications. Also disclosed are waxes useful for toners for use in electrostatographic printing applications. Both materials are prepared using a wax having a narrow melting range. The narrow melting range of the wax reduces energy requirements in printing applications. The use of the waxes also promotes release for high speed printing and especially promotes fast drying in wax based ink applications.

U.S. Patent 6,001,904 (Matzinger et al.), discloses phase change (hot melt) ink compositions for use in a phase change (hot melt) ink jet recording device in which recording is conducted by thermally melting the ink at a temperature above ambient temperature (20°C) to provide prints that possess high quality images, scratch resistance, abrasion resistance, low-temperature storage stability and flexibility, offset and pick resistance, adhesion, and other desired properties to comprise: (a) from about 0.1% to about 30% of one or more colorants; and (b) from about 0.1 to about 99.9% of one or more reversibly-crosslinked-polymers. Components other than those listed above may be included in the ink compositions to achieve specific printer, substrate, or end use requirements. Furthermore, the invention also includes methods for the preparation of reversibly-crosslinked-polymers and for their use in the above-described inks.

While known compositions and processes are suitable for their intended purposes, a need remains for phase change inks that can be jetted at temperatures below about 125°C, for phase change inks that can be jetted with reduced energy requirements, for phase change inks that can be jetted with less expensive printheads, for phase change inks that enable improved thermal stability of the inks manifested as the color's stability over time when heated in printers, for phase change inks that enable improved printer reliability, for phase change inks that enable quick recovery times from standby mode, for phase change inks that enable printing with "instant-on" mode. A need also remains for phase change inks that exhibit desirable viscosity values at reduced printing temperatures, for phase change inks that enable the aforementioned advantages and also exhibit good printing characteristics, such as transfixing properties (including dither and solid fill dropout performance), acceptable missed jets, folding and creasing performance, gloss, color intensity, recovery after standby mode, and the like, for phase change inks that generate images with improved hardness, for phase change inks that generate images with improved gloss, for phase change inks that exhibit reduced sweating; sweating is a problem wherein some ink ingredients migrate to the surface of solid ink sticks and aggregate at the ink stick surface inside the printer; the sticky "sweat" gradually drains down to the bottom and can cause the ink sticks to be difficult to slide in the ink load racks in the printers, for phase change inks that generate images with reduced showthrough when printed on paper substrates, for phase change inks that exhibit reduced clogging of printheads while exhibiting all of the aforementioned advantages, for phase change inks that enable reduced standby temperatures of phase change ink jet printheads without leading to clogging of the printhead, for phase change inks with desirably low freezing points, for phase change inks that transfer efficiently from an intermediate transfer member to a final recording substrate with reduced pixels left on the intermediate transfer member when the intermediate transfer member is at a desirably high temperature to enable efficient transfer member cooling and avoid automatic printer shutoff from heating of the intermediate transfer member by the ink, while also enabling jetting of the ink at a desirably low temperature, for phase change inks that exhibit desirably high smudge temperatures when still-hot prints pass along guidance tracks in the printer, thereby reducing accumulation of ink along these guidance tracks that could later be transferred to blank paper, for phase change inks that exhibit the above advantages and can also be prepared at desirably low costs, for phase change inks that have desirably high cohesive failure temperatures, for phase change inks that enable the aforementioned advantages at desirably low costs, for phase change ink wax components having a desirably narrow molecular weight distribution, for phase change ink wax components having a desirably low cloud point, for phase change ink wax components having desirably narrow melting ranges, and for phase change ink wax components having desirably high onset melting temperatures.

The phase change inks disclosed herein contain a carrier comprising a dialkyl ether of the formula R₁-O-R₂, wherein R₁ and R₂ each, independently of the other, represents an unsubstituted alkyl group having no heteroatoms therein, including both linear alkyl groups and branched alkyl groups, wherein R₁ and R₂ each, independently of the other have in various embodiments at least 10, 12, 14, 16 or 18 carbon atoms, and wherein R₁ and R₂ each, independently of the other have in various embodiments no more than 60, 58, 56, 54, 52, 50, 48, 46, 44, 42, or 40 carbon atoms, although the number of carbon atoms can be outside of these ranges.

R₁ and R₂ can have the same number of carbon atoms or different numbers of carbon atoms.

While not required, in one specific embodiment, when R₁ and/or R₂ are branched, R₁ and/or R₂ have from 18 to 60 carbon atoms. While not required, in one specific embodiment, when R₁ and/or R₂ are linear, R₁ and/or R₂ have from 18 to 40 carbon atoms.

One specific embodiment is directed to dibehenyl ether, wherein R₁ and R₂ each have 22 carbon atoms.

Ethers can be commercially obtained, or can be prepared by any desired or effective method. It is well known to prepare ethers from alcohols with elimination of water with an acid catalyst. The obtained ethers can be either symmetrical ethers or unsymmetrical ethers (if a combination of alcohols is used as the starting material). When two different alcohols are used, the products are a mixture of three ethers (two symmetrical ethers and one unsymmetrical ether with an approximate 1:1:2 molar ratio). The relatively pure unsymmetrical ether can be obtained by distillation techniques such as those described in, for example, U.S. Patents 4,232,177, 4,307,254, 4,336,407, 4,504,687, 4,987,807, and 5,118,873.

Dialkyl ethers included in the inks disclosed herein have an average peak molecular weight, as measured by high temperature gel permeation chromatography, of in various embodiments at least 350, 400, 450, and in various embodiments no more than 1,200, 1,150, or 1,100, although the average peak molecular weight can be outside of these ranges. The Williamson synthesis is another well known method for preparing unsysmetrical ethers by reacting alkyl halide and sodium alkoxide, as described in, for example, Organic Chemistry, Robert T. Morrison and Robert N. Boyd, Allyn and Bacon, Inc. 1987, pp. 702-703. Other references disclosing ether syntheses are, for example, J. Am. Chem. Soc. 54, p. 2088 (1932); J. Am. Chem. Soc. 70, p. 2400 (1948); Org. Syn. Coll. Vol. 4, p. 72 (1963); J. Org. Chem. 42, p. 2012 (1977); J. Org. Chem. 52, p. 3917 (1987); Vogel's Textbook of Practical Organic Chemistry, 5th Ed., Brain S. Furniss, Antony J. Hannaford, Peter W.G. Smith, Austin R. Tatchell, Longman Scientific & Technical, 1989, p, 581-582.

The dialkyl ether has a polydispersity (determined by dividing weight average molecular weight by number average molecular weight) in various embodiments of at least 1.0001, 1.0003, or 1.0005, and in various embodiments of no more than about 3.0, 2.5, or 2.0, although the polydispersity can be outside of these ranges.

The dialkyl ether has a peak melting point (as measured by differential scanning calorimetry (DSC)) in various embodiments of at least 45°C, 50°C, or 55°C, and in various embodiments of no more than 160°C, 150°C, or 140°C, although the peak melting point can be outside of these ranges.

The dialkyl ether has an onset melting point (as measured by differential scanning calorimetry (DSC)) in various embodiments of at least 40°C, 45°C, or 50°C, and in various embodiments of no more than 120°C, 110°C, or 100°C, although the onset melting point can be outside of these ranges.

The dialkyl ether has a melting range, which is defined as the difference between ending melting point and onset melting point as defined in ASTM D3418-03, in various embodiments of at least 2°C, 3°C, or 4°C, and in various embodiments of no more than 40°C, 35°C, or 30°C, although the melting range can be outside of these ranges.

The dialkyl ether has a freezing point (as measured by differential scanning calorimetry (DSC)) in various embodiments of at least 40°C, 45°C, or 50°C, and in various embodiments of no more than 140°C, 130°C, or 120°C, although the freezing point can be outside of these ranges.

The dialkyl ether has a viscosity at 110°C in various embodiments of at least 1, 2, or 3 centipoise, and in various embodiments of no more than 20, 15, or 10 centipoise, although the viscosity can be outside of these ranges.

By "average peak molecular weight" is meant that the dialkyl ether present in the phase change ink, which may comprise a mixture of molecules of the formula R₁-O-R₂, wherein R₁ and R₂ each, independently of the other, represents an unsubstituted alkyl group having no heteroatoms therein, including both linear alkyl groups and branched alkyl groups, has a distribution of molecules such that a plot of the relative amount of molecules versus the retention time or molecular weight would appear as a bell curve, wherein the peak of the bell curve represents the average peak molecular weight. In contrast, dialkyl ethers having a different average peak molecular weight value, while they may contain individual molecules wherein R₁ and/or R₂ have the same number of carbon atoms as those in the first sample, will have different characteristics.

Various measurements of molecular weight were taken for some polyethylene waxes and a dialkyl ether wax by high temperature gel permeation chromatography with a Polymer Labs 220HT system using refractive index detection, a mobile phase of 1,2,4-trichlorobenzene, and two Polymer 3 µm Mixed-E columns for separation. The entire system and the sample solution before injection were heated to 140°C. The molecular weights were characterized using polyethylene standards for calibration. One material (PE 500) was a polyethylene wax commercially available from Baker Petrolite, Tulsa, OK, being POLYWAX® 500 (PE 500). Also measured was a polyethylene wax commercially available from Baker Petrolite, Tulsa, OK, being POLYWAX® 655 (PE 655). Also measured (PE-C) was a polyethylene wax obtained from Baker Petrolite, Tulsa, OK, being similar to POLYWAX® 500 but having had removed by distillation both the lowest 15 percent molecular weight fraction and the highest 15 percent molecular weight fraction. This distillation can be carried out as described in, for example, U.S. Patent Publication 2005/0130054. Also measured (DBE) was a dibehenyl ether wax commercially available from Sasol Germany GmbH, Brunsbuettel, Germany. As measured by high temperature gel permeation chromatography using polyethylene standards for calibration, the peak average molecular weight (Mₚ), number average molecular weight (Mₙ), weight average molecular weight (M_{w}), and polydispersity (MWD) as measured by high temperature gel permeation chromatography for these waxes were as follows:

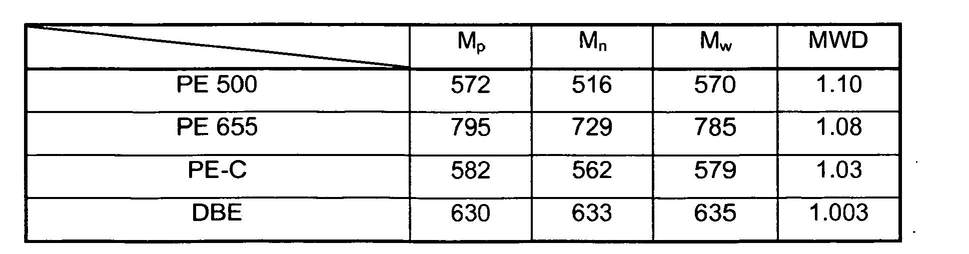

Peak melting point (°C, as measured by differential scanning calorimetry using a DUPONT 2100 calorimeter according to ASTM D 3418-03), onset melting point (°C, as measured by differential scanning calorimetry), viscosity at 110°C (centipoise, measured using a Rheometric Scientific DSR-2000 cone-plate rheometer), and freezing point (°C, as measured by differential scanning calorimetry) of the high temperature gel permeation chromatography data of these waxes were as follows:

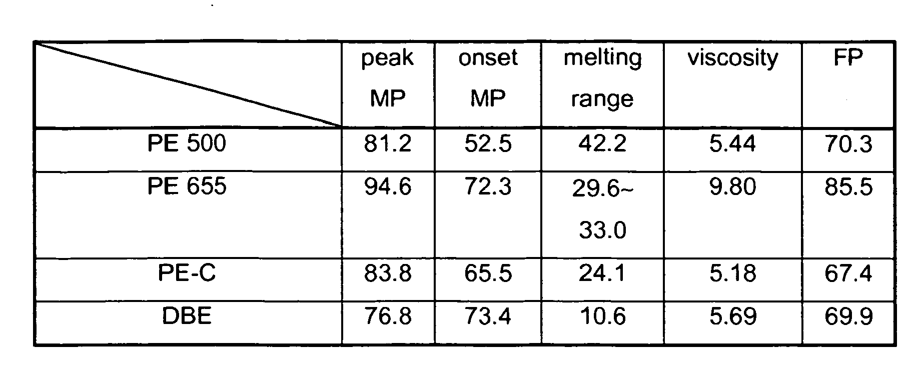

High onset melting temperature is an important and desirable wax feature affecting many ink performance characteristics, such as transfix efficiency, showthrough, and the like. As the data indicate, the dibehenyl ether had the highest onset melting point. In addition, the dibehenyl ether exhibited by far the lowest MWD, and the narrowest melting range by far.

Melted liquid clearness of the waxes was evaluated by melting samples of the waxes in glass jars and keeping them in an oven at various temperatures, followed by checking them with the naked eye for clearness versus the presence of precipitates over time. The results were as follows:

| Conditions | PE 500 | PE-C | DBE |
|---|---|---|---|
| 1 day at 120°C | clear | clear | clear |
| 3 days at 110°C | a little precipitate | clear | clear |
| 6 days at 105°C | a little precipitate | clear | clear |
| 11 days at 100°C | a little precipitate | clear | clear |
| 7 days at 95°C | not tested | not tested | clear |
| 40 days at 90°C | not tested | not tested | clear |

Although high molecular weight may lead to high onset melting point, there is another limits on increasing MW of waxes, which is the cloud point at which the wax become cloudy or gels from the clear, melted state. The cloudiness is believed to indicate the presence of precipitates responsible for printhead clogging, which results in reduced ink flow rate through screen filters in ink jet printhead, which in turn causes weak or missing jets. As the data indicate, the dibehenyl ether wax remained clear of clouding under all testing conditions, and was superior to the PE 500 sample and at least comparable to the PE-C sample.

The dialkyl ether is present in the ink in any desired or effective amount, in various embodiments at least 1, 3, or 5 percent by weight of the carrier, and in various embodiments no more than about 99, 97, or 95 percent by weight of the carrier, although the amount can be outside of these ranges.

The ink carrier further comprises an amide. Examples of suitable ink carrier materials include fatty amides, such as monoamides, triamides, tetra-amides, mixtures thereof, and the like. Specific examples of suitable fatty amide ink carrier materials include a dimer acid based tetra-amide that is the reaction product of dimer acid, ethylene diamine, and stearic acid, a dimer acid based tetra-amide that is the reaction product of dimer acid, ethylene diamine, and a carboxylic acid having at least about 36 carbon atoms, and the like, as well as mixtures thereof. When the fatty amide ink carrier is a dimer acid based tetra-amide that is the reaction product of dimer acid, ethylene diamine, and a carboxylic acid having at least about 36 carbon atoms, the carboxylic acid is of the general formula 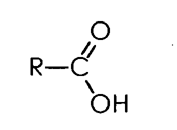 wherein R is an alkyl group, including linear, branched, saturated, unsaturated, and cyclic alkyl groups, said alkyl group in various embodiments having at least 36 or 40 carbon atoms, said alkyl group in various embodiments having no more than 200, 150, or 100 carbon atoms, although the number of carbon atoms can be outside of these ranges. Carboxylic acids of this formula are commercially available from, for example, Baker Petrolite, Tulsa, OK, and can also be prepared as described in Example 1 of U.S. Patent 6,174,937. Further information on fatty amide carrier materials is disclosed in, for example, U.S. Patents 4,889,560, 4,889,761, 5,194,638, 4,830,671, 6,174,937, 5,372,852, 5,597,856, and 6,174,937, and British Patent GB 2 238 792.

In one specific embodiment, the amide is a branched triamide. Branched triamides are disclosed in, for example, U.S. Patent 6,860,930. By "branched triamide" is meant that the structure of the triamide can be drawn so that each amide group is bonded to an atom or group of atoms contained in a branch other than that of the others, and that each amide group is in a different branch. By "each amide group is in a different branch" is meant that the triamide is not linear; by "linear" is meant a molecule wherein all three amide groups can be drawn as being in the same molecular chain or branch, such as linear triamides of the formulae 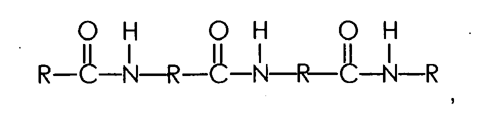 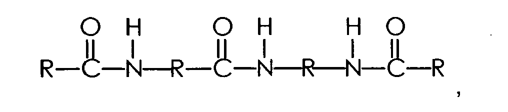 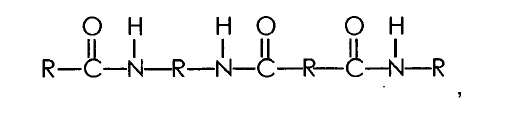 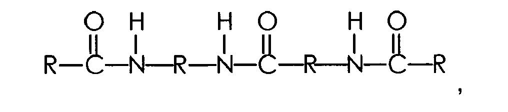 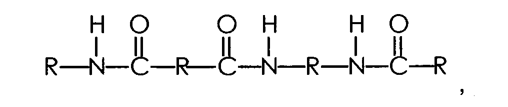 or the like. For purposes of the present invention, linear triamides include those wherein a line can be drawn through the three amide groups, even if one would ordinarily draw a different line. For example, a compound of the formula 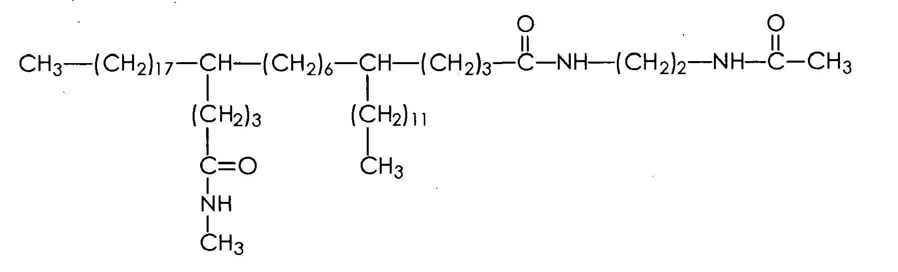 is considered a linear compound for purposes of the present invention, because it can also be drawn as follows: 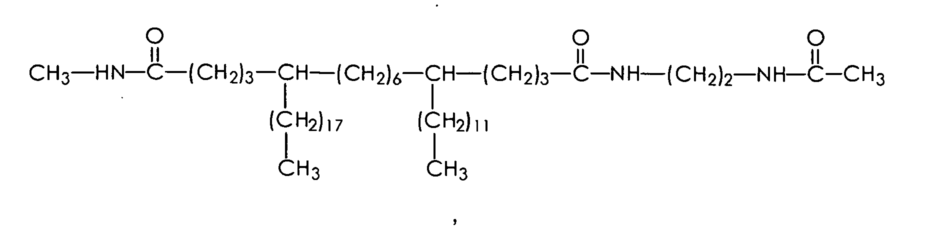 and accordingly would not be considered to be a branched triamide for the purposes of the inks discloses herein. For purposes of the inks disclosed herein, "branched triamines", "branched triacids", "branched monoamino diacids", and "branched diamino monoacids" have similar definitions in that each of the three functional groups named can be drawn as being in a different branch from the other two.

In one specific embodiment, the branched triamide is of the formula 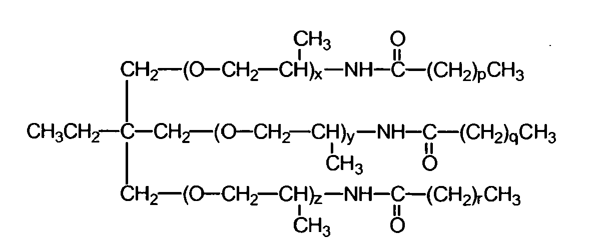 wherein x, y, and z each, independently represent the number of propyleneoxy repeat units and x+y+z is from 5 to 6, and wherein p, q, and r each, independently of the others, are integers representing the number of repeat -(CH₂)- units and are in various embodiments at least 15, 20, or 26, and are in various embodiments no more than 60, 55, or 45, although the value of p, q, and r can be outside of these ranges. The triamide composition is frequently obtained as a mixture of materials, wherein p, q, and r are each peak average chain length numbers within the composition, rather than uniform compositions wherein each molecule has the same value for p, q, and r, and it must be understood that within the mixture, some individual chains may be longer or shorter than the given numbers.

In this specific embodiment, the triamide is present in the ink in any desired or effective amount, in various embodiments at least 2, 5, or 10 percent by weight of the carrier, and in various embodiments no more than 50, 40, or 35 percent by weight of the carrier, although the amount can be outside of these ranges.

Additional examples of suitable phase change ink carrier materials are monoamides. Specific examples of suitable fatty amide ink carrier materials include stearyl stearamide, such as KEMAMIDE S-180, available from Crompton Corporation, Greenwich, CT, and the like. Further information on fatty amide carrier materials is disclosed in, for example, U.S. Patents 4,889,560, 4,889,761, 5,194,638, 4,830,671, 6,174,937, 5,372,852, 5,597,856, and 6,174,937, and British Patent GB 2 238 792. In one specific embodiment, a monoamide is present in the ink carrier in an amount in various embodiments of at least 0.01, 2, or 5 percent by weight of the carrier, and in various embodiments of no more than 90, 80, or 70 percent by weight of the carrier, although the amount can be outside of these ranges.

Also suitable as phase change ink carrier materials are isocyanate-derived resins and waxes, such as urethane isocyanate-derived materials, urea isocyanate-derived materials, urethane/urea isocyanate-derived materials, mixtures thereof, and the like. Further information on isocyanate-derived carrier materials is disclosed in, for example, U.S. Patents 5,750,604, 5,780,528, 5,782,966, 5,783,658, 5,827,918, 5,830,942, 5,919,839, 6,255,432, and 6,309,453, British Patents GB 2 294 939, GB 2 305 928, GB 2 305 670, GB 2 290 793, PCT Publications WO 94/14902, WO 97/12003, WO 97/13816, WO 96/14364, WO 97/33943, and WO 95/04760.

In one specific embodiment, the ink can contain a urethane resin obtained from the reaction of two equivalents of ABITOL® E hydroabietyl alcohol (available from Hercules Inc., Wilmington, DE) and one equivalent of isophorone diisocyanate, prepared as described in Example 1 of U.S. Patent 5,782,966. When present, this resin is present in the ink in various embodiments in an amount of at least 1, 2, 3, 4, or 5 percent by weight of the ink carrier, and in various embodiments no more than 80, 70, or 60 percent by weight of the ink carrier, although the amount can be outside of these ranges.

In another specific embodiment, the ink can contain a urethane resin that is the adduct of three equivalents of stearyl isocyanate and a glycerol-based alcohol prepared as described in Example 4 of U.S. Patent 6,309,453. When present, this resin is present in the ink in various embodiments in an amount of at least 0.5, 1, or 2 percent by weight of the ink carrier, and in various embodiments no more than 40, 35, or 30 percent by weight of the ink carrier, although the amount can be outside of these ranges.

The ink carrier is present in the phase change ink in any desired or effective amount, in various embodiments of at least 0.1, 50, or 90 percent by weight of the ink, and in various embodiments of no more than 99.9, 99.5, or 99 percent by weight of the ink, although the amount can be outside of these ranges.

The phase change ink compositions also contain a colorant. The phase change carrier compositions can be used in combination with phase change ink colorant materials such as Color Index (C.I.) Solvent Dyes, Disperse Dyes, modified Acid and Direct Dyes, Basic Dyes, Sulphur Dyes, Vat Dyes, and the like. Polymeric dyes can also be used, such as those disclosed in, for example, U.S. Patents 5,621,022 and 5,231,135 and commercially available from, for example, Milliken & Company as Milliken Ink Yellow 12, Milliken Ink Blue 92, Milliken Ink Red 357, Milliken Ink Yellow 1800, Milliken Ink Black 8915-67, uncut Reactant Orange X-38, uncut Reactant Blue X-17, Solvent Yellow 162, Acid Red 52, Solvent Blue 44, and uncut Reactant Violet X-80.

Also suitable are colorants as disclosed in U.S. Patents 6,472,523, 6,726,755, and 6,476,219, as disclosed in U.S. Patents 6,576,747, 6,713,614, 6,663,703, and 6,576,748, colorants as disclosed in U.S. Patents 6,958,406, 6,821,327, and colorants as disclosed in U.S. Patent 6,835,238, US-A-20050011410, US-A-2006021546, US-A-20060020141, US-A-20060016369, and colorants as disclosed in U.S. Patents 6,472,523, 6,726,755, 6,476,219, 6,663,703, 6,755,902, 6,590,082, 6,696,552, 6,576,748, 6,646,111, and 6,673,139.

Other ink colors besides the subtractive primary colors can be desirable for applications such as postal marking, industrial marking, and labelling using phase change printing, and the inks are applicable to these needs. Further, infrared (IR) or ultraviolet (UV) absorbing dyes can also be incorporated into the inks for use in applications such as "invisible" coding or marking of products.

In a specific embodiment, the colorant is an isocyanate-derived colored resin as disclosed in, for example, U.S. Patents 5,780,528 and 5,919,839.

The colorant is present in the phase change ink in any desired or effective amount to obtain the desired color or hue, in various embodiments at least 0.1, 0.2, or 0.5 percent by weight of the ink, and in various embodiments no more than 50, 20, or 10 percent by weight of the ink, although the amount can be outside of these ranges.

The inks can also optionally contain an antioxidant. The optional antioxidants of the ink compositions protect the images from oxidation and also protect the ink components from oxidation during the heating portion of the ink preparation process. When present, the optional antioxidant is present in the ink in any desired or effective amount, in various embodiments of at least 0.01, 0.05, or 0.1 percent by weight of the ink, and in various embodiments of no more than about 20, 5, or 3 percent by weight of the ink, although the amount can be outside of these ranges.

Other optional additives to the inks include clarifiers, tackifiers, plasticizers, and the like.

The ink compositions in various embodiments have peak melting points of no lower than 40°C, 45°C, or 50°C, and have melting points in various embodiments of no higher than 160°C, 150°C, or 140°C, although the peak melting point can be outside of these ranges.

The ink compositions generally have melt viscosities at the jetting temperature (in various embodiments no lower than 75°C, 85°C, or 95°C, and in various embodiments no higher than 150°C, or 130°C, although the jetting temperature can be outside of these ranges) in various embodiments of no more than 30, 25 20 centipoise, and in various embodiments of no less than 1, 2, or 3 centipoise, although the melt viscosity can be outside of these ranges.

The ink compositions can be prepared by any desired or suitable method. For example, the ink ingredients can be mixed together, followed by heating, to a temperature in various embodiments of at least 100°C, or 140°C, although the temperature can be outside of these ranges, and stirring until a homogeneous ink composition is obtained, followed by cooling the ink to ambient temperature (typically from 20 to 25°C). The inks are solid at ambient temperature. In a specific embodiment, during the formation process, the inks in their molten state are poured into molds and then allowed to cool and solidify to form ink sticks.

The inks can be employed in apparatus for direct printing ink jet processes and in indirect (offset) printing ink jet applications. Another embodiment disclosed herein is directed to a process which comprises incorporating an ink as disclosed herein into an ink jet printing apparatus, melting the ink, and causing droplets of the melted ink to be ejected in an imagewise pattern onto a recording substrate. A direct printing process is also disclosed in, for example, U.S. Patent 5,195,430. Yet another embodiment disclosed herein is directed to a process which comprises incorporating an ink as disclosed herein into an ink jet printing apparatus, melting the ink, causing droplets of the melted ink to be ejected in an imagewise pattern onto an intermediate transfer member, and transferring the ink in the imagewise pattern from the intermediate transfer member to a final recording substrate. In a specific embodiment, the intermediate transfer member is heated to a temperature above that of the final recording sheet and below that of the melted ink in the printing apparatus. In another specific embodiment, both the intermediate transfer member and the final recording sheet are heated; in this embodiment, both the intermediate transfer member and the final recording sheet are heated to a temperature below that of the melted ink in the printing apparatus; in this embodiment, the relative temperatures of the intermediate transfer member and the final recording sheet can be (1) the intermediate transfer member is heated to a temperature above that of the final recording substrate and below that of the melted ink in the printing apparatus; (2) the final recording substrate is heated to a temperature above that of the intermediate transfer member and below that of the melted ink in the printing apparatus; or (3) the intermediate transfer member and the final recording sheet are heated to approximately the same temperature. An offset or indirect printing process is also disclosed in, for example, U.S. Patent 5,389,958. In one specific embodiment, the printing apparatus employs a piezoelectric printing process wherein droplets of the ink are caused to be ejected in imagewise pattern by oscillations of piezoelectric vibrating elements. Inks as disclosed herein can also be employed in other hot melt printing processes, such as hot melt acoustic ink jet printing, hot melt thermal ink jet printing, hot melt continuous stream or deflection ink jet printing, and the like. Phase change inks as disclosed herein can also be used in printing processes other than hot melt ink jet printing processes.

Any suitable substrate or recording sheet can be employed, including plain papers such as XEROX® 4024 papers, XEROX® Image Series papers, Courtland 4024 DP paper, ruled notebook paper, bond paper, silica coated papers such as Sharp Company silica coated paper, JuJo paper, HAMMERMILL LASERPRINT® paper, and the like, transparency materials, fabrics, textile products, plastics, polymeric films, inorganic substrates such as metals and wood, and the like.

Specific embodiments will now be described in detail. These examples are intended to be illustrative, and the claims are not limited to the materials, conditions, or process parameters set forth in these embodiments. All parts and percentages are by weight unless otherwise indicated.

### EXAMPLE I

Ink compositions were prepared by the following process. All ink ingredients except colorant(s) were charged into a stainless steel beaker. The resulting mixture was then melted together at a temperature of about 110°C in an oven, followed by blending by stirring in a temperature controlled mantle at about 110°C for about 0.3 hour. To this mixture was then added the colorant(s). After stirring for about 2 additional hours, the ink thus formed was filtered through a heated MOTT® apparatus (obtained from Mott Metallurgical) using Whatman #3 filter paper under a pressure of about 15 pounds per square inch. The filtered phase change ink thus formed was poured into molds and allowed to solidify to form ink sticks. Inks were prepared from the following ingredients: narrow molecular weight distribution polyethylene wax, prepared by distilling POLYWAX 500 (obtained from Baker Petrolite, Tulsa, OK), to remove about 15 percent of the lower molecular weight fraction and about 15 percent of the upper molecular weight fraction, Mₚ=582, Mₙ=562, M_{w}=579, MWD=1.03 as measured by HT-GPC; dibehenyl ether (obtained from Sasol Germany GmbH, Brunsbuettel, Germany); a branched triamide of the formula 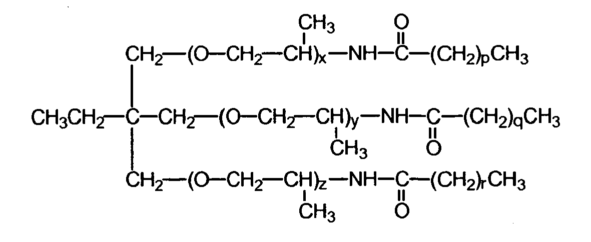 wherein p, q, and r each have an average value of about 35, prepared as described in Example II of U.S. Patent 6,860,930; stearyl stearamide wax (KEMAMIDE® S -180, obtained from Crompton Corporation, Greenwich, CT); KE-100 Resin (triglycerides of hydrogenated abietic (rosin) acid, obtained from Arakawa Chemical Industries (USA) Inc., Chicago, IL); a urethane resin that was the adduct of three equivalents of stearyl isocyanate and a glycerol-based alcohol, prepared as described in Example 4 of U.S. Patent 6,309,453; NAUGUARD® 445 antioxidant (obtained from Uniroyal Chemical Co., Middlebury, CT); and a yellow colorant as described in Examples I, II, and IV of U.S. Patent 6,713,614. The amounts in parts by weight of each ingredient are listed in the table below for each ink:

| Ingredient | Ink 1 | Ink 2 | Comparative Ink A |
|---|---|---|---|
| Polyethylene wax | 0 | 0 | 50.64 |
| dibehenyl ether | 51.50 | 54.00 | 0 |
| Triamide | 14.00 | 17.81 | 14.98 |
| S-180 | 15.20 | 15.00 | 14.915 |
| KE-100 | 12.90 | 11.00 | 13.02 |
| urethane wax | 4.21 | 0 | 4.33 |
| N-445 | 0.19 | 0.19 | 0.183 |
| yellow colorant | 2.00 | 2.00 | 1.92 |

Ink A was provided for comparative purposes.

### INK CHARACTERISTICS

Various characteristics of the inks were measured and are indicated in the table below. Viscosity (η, centipoise) was measured by a Rheometrics DSR-2000 cone-plate rheometer at 110°C. The spectral strength was determined using a spectrophotographic procedure based on the measurement of the ink absorption in solution by dissolving the ink in toluene and measuring the absorbance using a Perkin Elmer Lambda 2S UV/VIS spectrophotometer. Glass transition temperature (T_{g}) was measured by Dynamic Mechanic Analysis using a Rheometrics Solid Analyzer (RSA II). Onset melting point (MPₒ), Peak melting point (MPₚ) and peak freezing point (FP) (all °C) were measured by differential scanning calorimetry (DSC) using a DUPONT 2100 calorimeter. Melting range at half height is defined as the difference between the onset melting and ending melting point; narrow melting ranges are desirable.

| Property | Ink 1 | Ink 2 | Comparative Ink A |
|---|---|---|---|
| η | 10.96 | 10.75 | 10.79 |
| SS | 985 | 1019 | 992 |
| T_{g} | 16.36 | 31.2, -25.9, -19.6 | 14.8, -12.7 |
| MPₒ | 69.33 | 69.7 | 63.92 |
| MPₚ | 74.2 | 75.4 | 81.05 |
| melting range at half height (°C) | 7.77 | 9.15 | 13.34 |
| FP | 63.9 (shoulder 72.3) | 62.8 (shoulder 71.7,75.0) | 71.57 |

As the data indicate, the peak melting points of these inks are about 75°C and the viscosities of most of them are between about 10.75 and about 10.96 at 110°C, indicating that they are suitable for jetting at temperatures of from about 105 to about 115°C. The spectral strengths confirm good dissolution of the yellow colorants. In addition, the inks containing the dialkyl ether exhibit desirably low freezing points and peak melting points, enabling setting printer standby temperatures at lower settings and thus enabling low energy consumption. Furthermore, Inks 1 and 2 exhibit higher onset melting points compared to Comparative Ink A, a desirable feature for printers to be used at elevated temperatures, as manifested by reduced showthrough through the papers as indicated in the following section.

### INK PRINT SHOWTHROUGH

Inks 1, 2, and A were incorporated into a XEROX® PHASER® 8400 printer modified to print at 114°C, a resolution of 563x400, and a drop mass of 25 nanograms. Solid fill ink print samples were generated on XEROX® Color Xpressions® paper. These print samples were placed in ovens at room temperature, 60°C, and 65°C, and the colors on the back sides of the papers were monitored over time for showthrough. No noticeable showthrough was noticed on any of the prints when the print samples were aged at room temperature for 22 days. Showthrough occurred, however, at 60°C and 65°C. Color space data were obtained for the back sides of the paper on an ACS® Spectro Sensor® II Colorimeter (obtained from Applied Color Systems Inc.) in accordance with the measuring methods stipulated in ASTM 1 E805 (Standard Practice of Instrumental Methods of Color or Color Difference Measurements of Materials) using the appropriate calibration standards supplied by the instrument manufacturer. For purposes of verifying and quantifying the overall colorimetric performance of the inks, measurement data were reduced, via tristimulus integration, following ASTM E308 (Standard Method for Computing the Colors of Objects using the CIE System) in order to calculate the 1976 CIE L* (Lightness), a* (redness-greenness), and b* (yellowness-blueness) CIELAB values for each phase change ink sample. The color changes in Delta E versus time are shown in the table below.

| Day | Ink 1 | Ink 2 | Ink A |
|---|---|---|---|
| 0 | 0 | 0 | 0 |
| 1.0 | 0.6 | 0.7 | 1.4 |
| 2.0 | 0.8 | 0.8 | 1.8 |
| 3.8 | 1.1 | 1.1 | 2.7 |
| 7.0 | 1.6 | 1.9 | 3.3 |
| 16.0 | 2.2 | 2.1 | 3.85 |
| 22.0 | 2.4 | 2.3 | 4.3 |

| | | | |
|---|---|---|---|
| Color change (Delta E) versus time at 60°C | | | |

| Day | Ink 1 | Ink 2 | Ink A |
|---|---|---|---|
| 0 | 0 | 0 | 0 |
| 1.0 | 2.2 | 1.4 | 3.4 |
| 2.0 | 3.2 | 1.9 | 5.1 |
| 3.8 | 4.5 | 2.8 | 6.7 |
| 7.0 | 5.8 | 3.3 | 8.1 |
| 16.0. | 8.1 | 4.2 | 10.1 |
| 22.0 | 9.0 | 4.4 | 10.4 |

| | | | |
|---|---|---|---|
| Color change (Delta E) versus time at 65°C | | | |

As the results indicate, Inks 1 and 2 containing the dialkyl ether exhibited less showthrough than comparative Ink A containing the polyethylene wax.

### PRINTING TEMPERATURE PERFORMANCE

Inks 1, 2, and A were incorporated into a XEROX® PHASER® 8400 printer modified to enable various temperatures to be tested. From a systems design point of view, it can be desirable to increase the temperature of both the final printing substrate and the intermediate transfer drum. Increased drum temperature facilitates the needed temperature gradient relative to ambient in order to transfer sufficient heat such that sustained printing can be achieved. To measure cohesive failure the drum temperature is increased until the ink is so soft that it fractures and, therefore, does not transfer off the drum. Increased final medium preheating typically maximizes image transfer efficiency and ink durability. Medium preheating can be accomplished using direct heat conduction through the contact of a metal plate-on-plate paper preheater that contacts the medium on both sides just prior to transferring the image to the medium. During a duplex print job, however, the medium already has one side imaged, and the ink itself thus must contact the metal plate preheater. If the ink smears or smudges down the page during the contact of the preheater, this is termed smudge. The highest temperature the medium preheater can obtain without any noticeable smudge is the smudge temperature, and is the highest temperature at which the preheater can be operated. Accordingly, it can be desirable to increase the setpoint of the intermediate transfer member, desirable to increase the temperature of the final transfer recording sheet medium, and desirable to increase the preheater setpoint temperature for better control, or to avoid blocking, duplex smudging, or the like. Thus, phase change inks that provide the flexibility of allowing such temperature increases are desirable. In this instance, the jetting temperature was 114°C and the drop mass was 25 nanograms. Inks 1, 2, and A had the indicated maximum temperatures (°C) in the test fixture. The inks were also tested for jetting, transfixing, and durability of the resultant prints after jetting at 114°C with a drop mass of 25 nanograms. Dropout refers to the efficiency of ink transfer from the print engine to the final recording sheet. When dropout is very bad, part of the image is missing from the print (i.e., the pixels are not transferred from the intermediate transfer member to the final recording sheet). Dither dropout refers to a transfer failure when printing dithered images (for example, 30 percent to 70 percent coverage) and on rough recording sheets. Solid dropout refers to a transfer failure when printing a solid fill (the highest fill for any given color) on smooth or rough recording sheets. To measure dropout, a chase recording sheet with a very smooth surface is run at relatively slow transfix velocity immediately after a print. The chase sheet is used to pick up any ink that was left on the intermediate transfer member. The chase sheet is scanned and the value of dropout is recorded. In all instances, the paper temperature was 60°C. The inks were printed onto XEROX® COLOR XPRESSIONS® paper. As the term implies, fold durability relates to the ability of the ink (on the recording sheet) to be folded without cracking, breaking, and/or falling off the page leaving a line of missing ink. Fold is quantified by measuring the average width of the white area left after a fold. A solid fill is used since it is a stress case. Gloss is a visual impression that is caused when a surface is evaluated. The more direct light that is reflected, the more obvious will be the impression of gloss. Gloss is measured with a meter such as the BYK Gardner micro-TRI-gloss meter. A solid primary or secondary fill is used when measuring gloss in terms of percentage.

| | Ink 1 | Ink 2 | Ink A |
|---|---|---|---|
| Smudge Temp. | 70 | 70 | 70 |
| Offset Temp. | 70 | 70 | 60 |
| Cohesive Failure Temp. | 65 | 65 | 67 |
| solid fill dropout | good | good | good |
| dither dropout | good | good | good |
| solid fill duplex dropout | good | good | good |
| 50% fill duplex dropout | good | fair | fair |
| gloss | 21.9 | 22.7 | 24.4 |
| fold (mil) | 6.04 | 15.4 | 6.0 |

As the results indicate, Inks 1 and 2 containing the ether exhibited similar jetting and smudge temperatures as comparative Ink A containing the polyethylene wax, but exhibited desirably higher offset temperatures. The poor fold performance of Ink 2 is believed to be attributable to the absence of the urethane resin.

### EXAMPLE II

To a 5 liter three-necked round-bottom flask with a Dean-Stark apparatus in the central socket having a reflux condenser in the upper joint, an attached nitrogen inlet tube and thermometer in two side necks separately with screw-capped cone adapters is added 3.546 kg of 1-hexacosanol (C24 alcohol available from Aldrich Chemical Company, Milwaukee, WI), and 2.705 kg of 1-octadecanol (C18 alcohol available from Aldrich Chemical Company), 500 g of concentrated sulfuric acid, and a magnetic stirring bar. The flask is heated gradually to 180°C with slow blowing of nitrogen into the flask via the inlet tube to carry generated water out into the side-arm collector. Stirring begins after the mixture is melted in the flask. Stirring continues at 180°C until almost 180 ml of water is collected. (Some water may be lost to the atmosphere.) The products in the flask are then gradually cooled to about 100°C and slowly poured into 100 L of water with stirring. The resulting powder is collected by filtration and washed with water three times (each time with about 10 L). The powder is dried in an oven at 45°C with blowing air for 1 day. The powder contains a mixture of dihexacosanyl ether, dioctadecanyl ether, and about 50 wt% of the asymmetrical hexacosanyl octadecanyl ether. The asymmetrical ether is then separated from the symmetrical ethers by the method described in U.S. Patent 5, 032,249, the disclosure of which is totally incorporated herein by reference, using wiped film evaporators.

An ink composition is then prepared by the method described in Example I except that the hexacosanyl octadecanyl ether is substituted for the dibehenyl ether. It is believed that similar results will be obtained.

## Claims

1. A phase change ink comprising (a) a colorant and (b) a phase change ink carrier, said carrier comprising (i) an amide and (ii) a dialkyl ether of the formula R₁-O-R₂, wherein R₁ and R₂ each, independently of the other, represents an unsubstituted alkyl group having no heteroatoms therein, including both linear alkyl groups and branched alkyl groups, wherein R₁ and R₂ each, independently of the other have at least about 10 carbon atoms and wherein R₁ and R₂ each, independently of the other have no more than about 60 carbon atoms.

2. An ink according to claim 1, wherein the amide comprises a branched triamide.

3. An ink according to claim 2, wherein the branched triamide is of the formula 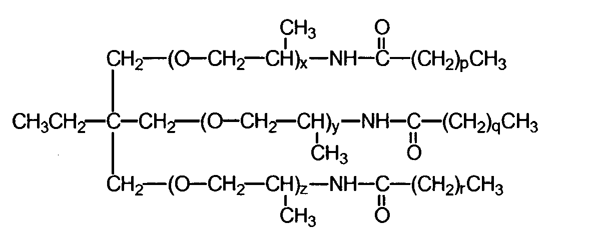 wherein x, y, and z each independently represent the number of propyleneoxy repeat units and x+y+z is from 5 to 6, and wherein p, q, and r each, independently of the others, are integers representing the number of repeat -(CH₂)- units.

4. An ink according to claim 3, wherein p, q, and r have an average peak value of from 15 to 60, preferably 26 to 45.

5. An ink according to claim 1, wherein the amide is present in the ink in an amount of at least 2 %, and no more than 50%, by weight of the ink carrier.

6. An ink according to claim 1, further containing a monoamide.

7. An ink according to claim 1, further containing an isocyanate-derived material.

8. An ink according to claim 1, wherein R₁ and R₂ each, independently of the other, have at least 18, and no more than 40 carbon atoms.

9. An ink according to claim 1, wherein R₁ and R₂ have the same number of carbon atoms, preferably 22 carbon atoms.

10. A process which comprises (1) incorporating into an ink jet printing apparatus a phase change ink comprising (a) a colorant and (b) a phase change ink carrier, said carrier comprising (i) an amide and (ii) a dialkyl ether of the formula R₁-O-R₂, wherein R₁ and R₂ each, independently of the other, represents an unsubstituted alkyl group having no heteroatoms therein, including both linear alkyl groups and branched alkyl groups, wherein R₁ and R₂ each, independently of the other have at least about 10 carbon atoms and wherein R₁ and R₂ each, independently of the other have no more than about 60 carbon atoms; (2) melting the ink; and (3) causing droplets of the melted ink to be ejected in an imagewise pattern onto a substrate.

## Patentansprüche

1. Phasenwechseltinte, umfassend (a) ein Farbmittel und (b) einen Phasenwechseltintenträger, wobei der Träger (i) ein Amid und (ii) einen Dialkylether der Formel R₁-O-R₂ umfasst, wobei R₁ und R₂ jeweils unabhängig voneinander eine unsubstituierte Alkylgruppe, die keine Heteroatome darin aufweist, bedeuten, wobei sowohl lineare Alkylgruppen als auch verzweigte Alkylgruppen eingeschlossen sind, wobei R₁ und R₂ jeweils unabhängig voneinander wenigstens ungefähr 10 Kohlenstoffatome aufweisen und wobei R₁ und R₂ jeweils unabhängig voneinander nicht mehr als ungefähr 60 Kohlenstoffatome aufweisen.

2. Tinte nach Anspruch 1, wobei das Amid ein verzweigtes Triamid umfasst.

3. Tinte nach Anspruch 2, wobei das verzweigte Triamid die Formel aufweist 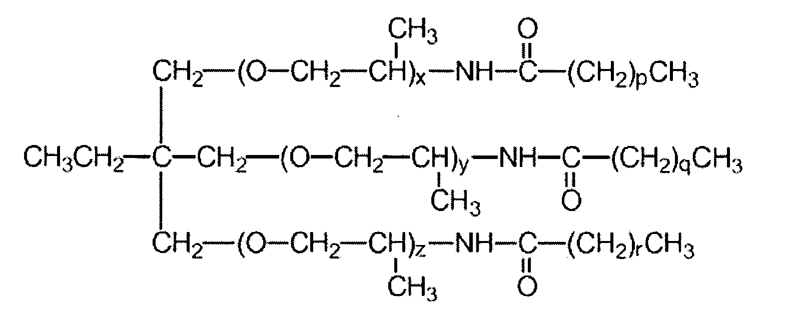 wobei x, y und z jeweils unabhängig voneinander die Anzahl von Propylenoxy-Wiederholungseinheiten bedeuten und x + y + z 5 bis 6 beträgt, und wobei p, q und r jeweils unabhängig voneinander ganze Zahlen sind, welche die Anzahl von -(CH₂)-Wiederholungseinheiten bedeuten.

4. Tinte nach Anspruch 3, wobei p, q und r einen mittleren Spitzenwert von 15 bis 60, vorzugsweise 26 bis 45 aufweisen.

5. Tinte nach Anspruch 1, wobei das Amid in der Tinte in einer Menge von wenigstens 2 % und nicht mehr als 50 %, bezogen auf das Gewicht des Tintenträgers, vorhanden ist.

6. Tinte nach Anspruch 1, außerdem enthaltend ein Monoamid.

7. Tinte nach Anspruch 1, außerdem enthaltend ein von einem Isocyanat abgeleitetes Material.

8. Tinte nach Anspruch 1, wobei R₁ und R₂ jeweils unabhängig voneinander wenigstens 18 und nicht mehr als 40 Kohlenstoffatome aufweisen.

9. Tinte nach Anspruch 1, wobei R₁ und R₂ die gleiche Anzahl von Kohlenstoffatomen, vorzugsweise 22 Kohlenstoffatome aufweisen.

10. Verfahren, welches umfasst (1) das Einfüllen einer Phasenwechseltinte in einen Tintenstrahldruckapparat, die (a) ein Farbmittel und (b) einen Phasenwechseltintenträger umfasst, wobei der Träger (i) ein Amid und (ii) einen Dialkylether der Formel R₁-O-R₂ umfasst, wobei R₁ und R₂ jeweils unabhängig voneinander eine unsubstituierte Alkyl-gruppe, die keine Heteroatome darin aufweist, bedeuten, wobei sowohl lineare Alkyl-gruppen als auch verzweigte Alkylgruppen eingeschlossen sind, wobei R₁ und R₂ jeweils unabhängig voneinander wenigstens ungefähr 10 Kohlenstoffatome aufweisen und wobei R₁ und R₂ jeweils unabhängig voneinander nicht mehr als ungefähr 60 Kohlenstoffatome aufweisen; (2) das Schmelzen der Tinte; und (3) das Bewirken, dass Tröpfchen der geschmolzenen Tinte in einem bildweisen Muster auf ein Substrat ausgestoßen werden.

## Revendications

1. Encre à changement de phase comprenant (a) une matière colorante et (b) un support d'encre à changement de phase, ledit support comprenant (i) un amide et (ii) un éther dialkylique de la formule R₁-O-R₂, dans lequel R₁ et R₂, chacun indépendamment de l'autre, représentent un groupe alkyle non substitué n'ayant pas d'hétéroatomes dans celui-ci, incluant à la fois des groupes alkyle linéaires et des groupes alkyle ramifiés, dans lequel R₁ et R₂, chacun indépendamment de l'autre, ont au moins environ 10 atomes de carbone et dans lequel R₁ et R₂, chacun indépendamment de l'autre, n'ont pas plus d'environ 60 atomes de carbone.

2. Encre selon la revendication 1, dans laquelle l'amide comprend un triamide ramifié.

3. Encre selon la revendication 2, dans laquelle le triamide ramifié est de la formule 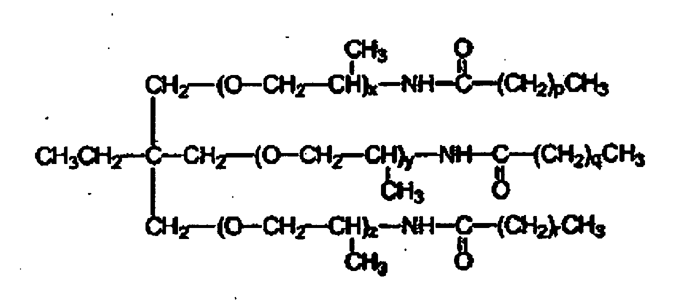 dans laquelle x, y et z chacun indépendamment représentent le nombre d'unités propylèneoxy répétitives et x+y+z est de 5 à 6, et dans laquelle p, q et r, chacun indépendamment des autres, sont des entiers représentant le nombre d'unités - (CH₂) - répétitives.

4. Encre selon la revendication 3, dans laquelle p, q et r ont une valeur pic moyenne de 15 à 60, préférablement 26 à 45.

5. Encre selon la revendication 1, dans laquelle l'amide est présent dans l'encre dans une quantité d'au moins 2%, et de pas plus de 50%, en poids du support d'encre.

6. Encre selon la revendication 1, contenant en outre un monoamide.

7. Encre selon la revendication 1, contenant en outre une matière dérivée d'un isocyanate.

8. Encre selon la revendication 1, dans laquelle R₁ et R₂, chacun indépendamment de l'autre, ont au moins 18, et pas plus de 40 atomes de carbone.

9. Encre selon la revendication 1, dans laquelle R₁ et R₂ ont le même nombre d'atomes de carbone, préférablement 22 atomes de carbone.

10. Procédé qui comprend (1) l'incorporation dans un appareil d'impression à jet d'encre d'une encre à changement de phase comprenant (a) une matière colorante et (b) un support d'encre à changement de phase, ledit support comprenant (i) un amide et (ii) un éther dialkylique de la formule R₁-O-R₂, dans lequel R₁ et R₂, chacun indépendamment de l'autre, représentent un groupe alkyle non substitué n'ayant pas d'hétéroatomes dans celui-ci, incluant à la fois des groupes alkyle linéaires et des groupes alkyle ramifiés, dans lequel R₁ et R₂, chacun indépendamment de l'autre, ont au moins environ 10 atomes de carbone et dans lequel R₁ et R₂, chacun indépendamment de l'autre, n'ont pas plus d'environ 60 atomes de carbone ; (2) la fusion de l'encre ; et (3) l'éjection de gouttelettes de l'encre fondue selon un motif d'image sur un substrat.
